# EUROPEAN PATENT APPLICATION

(11) **EP 0 685 736 A1**
(43) Date of publication of application: **06.12.1995**
(21) Application number: 95106312.2
(22) Date of filing: 27.04.1995
(51) Int. Cl.: G01N 27/30, G01N 27/333

(54) **Improvements in or relating to pH-sensors**

(30) Priority: 13.05.1994 GB 9409554; 31.05.1994 GB 9410859
(71) Applicant: Siemens Plessey Controls Limited, Poole, Dorset BH17 7ER (GB)
(72) Inventor: Birch, Brian Jeffrey, Chelverston, Northamptonshire NN9 6AW (GB); Thomas, Nigel John, Poole, Dorset BH17 8WD (GB); Atkinson, John Karl, Romsey, Hampshire SO51 0HL (GB); Cranny, Andrew William James, West End, Southampton SO3 3LZ (GB); Siuda, Przemyslaw, Dr., 44/100 Gliwict (PL)
(74) Representative: Allen, Derek

(57) **Abstract**

A pH sensor comprising an insulative substrate eq. alumina (1), a conductive layer eq. Au, Pt, C or RuO₂ (2) supported on the said substrate, a first terminal region which forms a part of the said conductive layer and which is arranged to provide for an electrical connection to the sensor, a second region (2b) of the said conductive layer overlaid by a filled polymer matrix (5) arranged in electrical communication with the said layer via a region (4) of metal eq. iridium the oxide of which is pH sensitive, the said matrix being filled with this pH sensitive metal oxide eq.IrO₂, and an insulative layer eq. epoxy or ceramic (3) which serves to mask a surface of the conductive layer between the said first terminal region and the said second region, is fabricated using thick film techniques.

## Description

This invention relates to sensors and more especially it relates to sensors for measuring the pH of liquids such as water, for example.

Water quality monitoring apparatus which uses a pH sensor is described in our co-pending GB patent application number 9324663.5, to which attention is hereby directed.

It is important that pH sensors for water quality monitoring should have repeatable characteristics and it is also advantageous that they should be simple and reasonably inexpensive to manufacture.

Accordingly, it is an object of the present invention to provide a sensor suitable for monitoring the pH of water, which sensor has predictable characteristics and may be easily manufactured.

According to the present invention, a pH sensor comprises an insulative substrate, a conductive layer supported on the said substrate, a first terminal region which forms a part of the said conductive layer and which is arranged to provide for an electrical connection to the sensor, a second region of the said conductive layer overlaid by a filled polymer matrix arranged in electrical communication with the said conductive layer via a region of metal the oxide of which is pH sensitive, the said matrix being filled with this pH sensitive metal oxide, and an insulative layer which serves to mask a surface of the conductive layer between the said first terminal region and the said second region.

The region of metal, the oxide of which is pH sensitive may be a metal in the transition series of the periodic table.

In use of the sensor, the filled matrix is exposed to a liquid, the pH of which is required to be sensed, an electrical path through the liquid to the terminal region being completed, whereby the pH of the liquid is indicated in dependence upon the electrical characteristics of the said path.

The conductive layer may be a metal layer such as gold and/or platinum composite or alloy, carbon, or a conductive oxide material such as a ruthenium oxide applied as a paste.

The said metal region may be iridium, the matrix being filled with iridium oxide.

In alternative arrangements, however, the metal region might be antimony, osmium, paladium, ruthenium, or platinum for example, the matrix being filled with a corresponding oxide of the metal chosen.

The substrate may be made of alumina.

The matrix may be an epoxy resin or other polymeric matrix material.

The insulative layer may also be an epoxy resin or a cermet material or other dielectric material.

Some embodiments of the invention will now be described by way of example only with reference to the accompanying drawings, wherein,

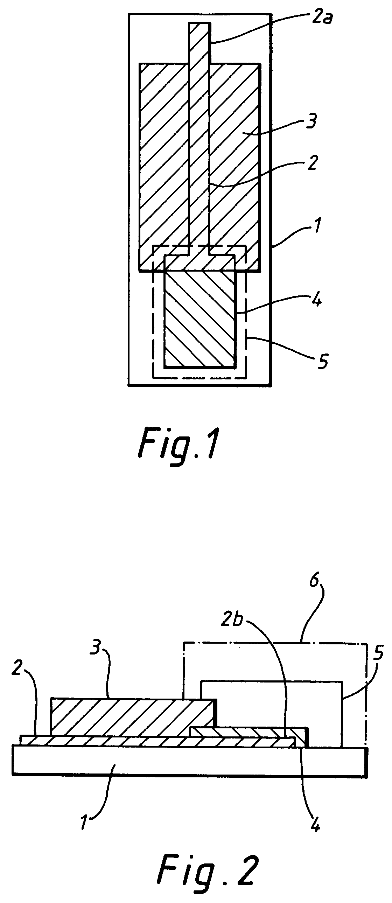

FIGURE 1 is a plan view of a pH sensor device;
FIGURE 2 is a side view of the device as shown in Figure 1 bearing, as appropriate, the same numerical designations, and
FIGURE 3 is a graph which illustrates a linear operating characteristic associated with the device as shown in Figure 1 and Figure 2.

Referring now to the drawings, the device comprises an insulative substrate 1, which in this example is made of alumina ceramic, on which a metal layer 2 is supported. The metal layer 2 may be made of gold or platinum or an alloy or composite of these two metals or of other conductive material, e.g. carbon or ruthenium oxide. One region 2a of the metal layer is arranged to serve as a terminal to provide for electrical connection to the sensor device. The terminal may be formed from a further metal layer that permits soldering or facilitates other means of electrical contact. A second region 2b of the layer 2 is separated from the terminal region 2a by insulating material which in this example is an epoxy resin dielectric layer 3 which serves to mask a surface of the layer 2 between the regions 2a and 2b. The second region 2b is overlaid by a polymer matrix 5 which might be an epoxy resin, a phenolic resin or any other suitable material which can be mixed with a metal oxide and which can be printed and cured as necessary. The polymer matrix 5 is filled with iridium oxide and arranged in electrical communication with the region 2b of the layer 2 via a layer 4 of iridium. Although iridium is used in this example, any other suitable transition metal may alternatively be used, the matrix 5 being filled with a corresponding pH sensitive oxide of the metal chosen.

In use of the pH sensor a region enclosed by a broken line 6 is exposed to a liquid the pH of which is required to be sensed. Thus it will be apparent that there is an electrical path through the liquid to the terminal region 2a via the filled polymer matrix 5 and the layer 4 of transition metal.

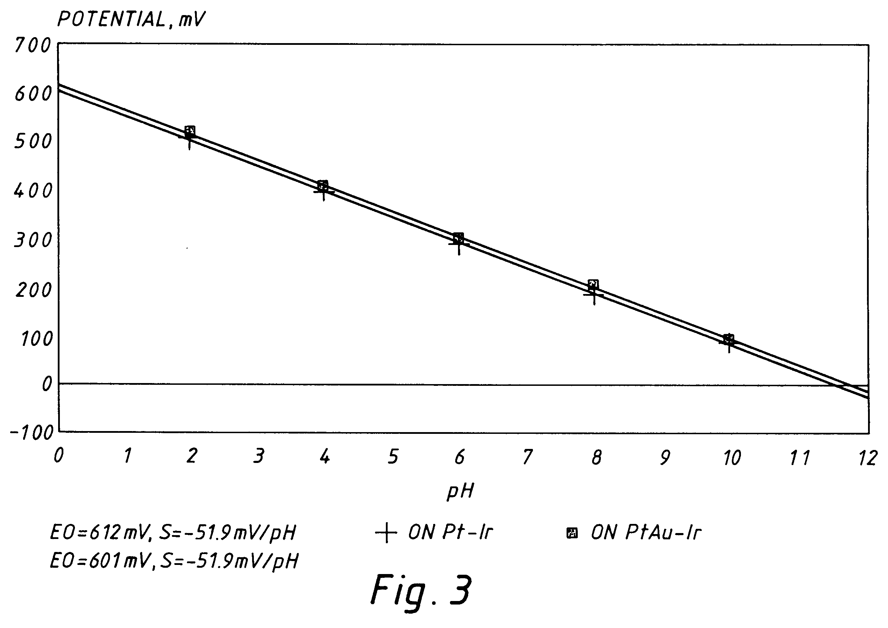

As can be seen from Figure 3, the device provides linear operating characteristics over a wide range of pH values, and additionally the device may simply and inexpensively be manufactured by thick film techniques which are well known to those skilled in the art.

Various modifications may be made to the sensor as hereinbefore described without departing from the scope of the invention, and for example, although in the foregoing embodiment the layer 4 is deposited before the epoxy resin dielectric layer 3, in an alternative embodiment the layer 3 may be deposited first and overlaid by the layer 4. If the dielectric layer 3 is deposited before the layer 4 it could comprise a ceramic material.

## Claims

1. A pH sensor comprising an insulative substrate, a conductive layer supported on the said substrate, a first terminal region which forms a part of the said conductive layer and which is arranged to provide for an electrical connection to the sensor, a second region of the said conductive layer overlaid by a filled polymer matrix arranged in electrical communication with the said layer via a region of metal the oxide of which is pH sensitive, the said matrix being filled with this pH sensitive metal oxide, and an insulative layer which serves to mask a surface of the conductive layer between the said first terminal region and the said second region.

2. A pH sensor as claimed in Claim 1, wherein an alloy is formed comprising the material of the said metal and the material of the said conductive layer, which alloy forms a diffuse junction therebetween.

3. A pH sensor as claimed in Claim 1 or Claim 2, wherein the metal the oxide of which is pH sensitive is a metal in the transition series of the periodic table.

4. A pH sensor as claimed in any of Claims 1 to 3, wherein the conductive layer comprises gold.

5. A pH sensor as claimed in any of Claims 1 to 4, wherein the conductive layer comprises platinum.

6. A pH sensor as claimed in any preceding claim, wherein the conductive layer comprises a gold/platinum alloy.

7. A pH sensor as claimed in Claim 1, wherein the conductive layer comprises ruthenium oxide.

8. A pH sensor as claimed in Claim 1, wherein the conductive layer comprises carbon.

9. A pH sensor as claimed in any of Claims 3 to 8, wherein the transition metal is iridium, the matrix being filled with iridium oxide.

10. A pH sensor as claimed in any preceding claim, wherein the substrate is made of alumina.

11. A pH sensor as claimed in any preceding claim, wherein the matrix is an epoxy resin or other polymeric material.

12. A pH sensor as claimed in any preceding claim, wherein the insulative layer is an epoxy resin or cermet material.

13. Apparatus for liquid monitoring/sensing comprising a sensor as claimed in any preceding claim.

14. Water quality monitoring apparatus comprising a sensor as claimed in any of Claims 1 to 13.
